# EUROPÄISCHE PATENTSCHRIFT

(11) **EP 1 917 184 B1**
(45) Veröffentlichungstag und Bekanntmachung des Hinweises auf die Patenterteilung: **22.04.2009**
(21) Anmeldenummer: 06743136.1
(22) Anmeldetag: 09.06.2006
(51) Int. Cl.: B64C 1/20, B64D 9/00

(54) **SKALIERBARES FRACHTLADESYSTEM, INSBESONDERE FÜR EIN LUFTFAHRZEUG**
SCALABLE FREIGHT LOADING SYSTEM, ESPECIALLY FOR AN AIRCRAFT
SYSTEME DE CHARGEMENT DE FRET MODULABLE, NOTAMMENT POUR UN AERONEF

(30) Priorität: 26.08.2005 DE 102005040408
(43) Veröffentlichungstag der Anmeldung: 07.05.2008
(73) Patentinhaber: Rheinmetall Defence Electronics GmbH, 28309 Bremen (DE)
(72) Erfinder: KRANZ, Willi, 27576 Bremerhaven (DE); ZISCHOW, Ekkehard, 28357 Bremen (DE)
(74) Vertreter: Thul, Hermann
(86) Internationale Anmeldenummer: PCT/EP2006/005514
(87) Internationale Veröffentlichungsnummer: WO 2007/022814

(56) Entgegenhaltungen:
- EP-A- 0 512 672
- EP-A- 0 769 450
- US-A- 4 225 926
- US-A- 5 213 201

## Beschreibung

### Technisches Gebiet

Die vorliegende Erfindung betrifft ein skalierbares Frachtladesystem, insbesondere für ein Luftfahrzeug.

### Stand der Technik

Um ein .Frachtstück, beispielsweise einen Container oder eine Palette, in ein Transportmittel einzubringen und innerhalb des Transportmittels zu rangieren, werden Frachtladesysteme mit Antriebsmitteln beispielsweise in Form sogenannter Power-Drive-Units (PDU) eingesetzt. Weiterhin weisen derartige Systeme Überdeckungssensoren, Näherungsschalter und Riegel zur Fixierung der Frachtstücke auf. Ein Überdeckungssensor stellt fest, ob das zugehörige Antriebsmittel vom Frachtstück überdeckt ist, während ein Näherungsschalter den Zustand eines Riegels überwacht. Kontrolliert wird das Frachtladesystem von einer zentralen Steuereinrichtung, in die beispielsweise mittels eines Joysticks oder sonstiger Eingabemittel Fahrbefehle eingegeben werden.

Nach bisherigem Stand der Technik, siehe etwa US-A-5 213 201, ist es üblich, einzelne Komponenten des Frachtladesystems, wie Antriebsmittel und Sensoren, über serielle Schnittstellen an die zentrale Steuereinrichtung anzuschließen. Dies hat den Nachteil, dass die zentrale Steuereinrichtung entsprechend viele IO-Ports aufweisen und verwalten muss. Sind alle dieser Ports belegt, so ist ein späterer Ausbau des Frachtladesystems nur durch Austausch der zentralen Steuereinrichtung möglich.

Eine weitere Möglichkeit besteht darin, alle Komponenten des Frachtladesystems über einen Datenbus an die zentrale Steuereinrichtung anzuschließen. Dies hat jedoch den Nachteil, dass selbst einfachste Komponenten wie Näherungsschalter eine Bus-Schnittstelle aufweisen müssen, die in der Realisierung aufwändiger sein kann als die anzubindende Komponente selbst.

### Darstellung der Erfindung

Es ist daher die Aufgabe der vorliegenden Erfindung, ein Frachtladesystem bereitzustellen, das einfach skalierbar, kostengünstig und einfach wartbar ist. Es ist ferner die Aufgabe der vorliegenden Erfindung, ein Verfahren zum Betrieb eines solchen skalierbaren Frachtladesystems anzugeben.

Gelöst wird diese Aufgabe durch ein skalierbares Frachtladesystem gemäß Patentanspruch 1 und durch ein Verfahren zum Betrieb eines solchen Frachtladesystems nach Patentanspruch 5. Vorteilhafte Ausgestaltungsformen sind in den abhängigen Patentansprüchen angegeben.

Ein erfindungsgemäßes skalierbares Frachtladesystem verfügt über Antriebsmittel, Überdeckungssensoren, Riegel, Näherungsschalter und eine zentrale Steuereinrichtung, wobei die Ladefläche in Sektoren aufgeteilt ist, jedem Sektor eine lokale Steuereinheit zugeordnet ist, die Antriebsmittel, Überdeckungssensoren und Näherungsschalter eines Sektors an IO-Ports der lokalen Steuereinheit angeschlossen sind und die lokalen Steuereinheiten über ein Bussystem mit der zentralen Steuereinheit verbunden sind. Beim Betrieb eines solchen skalierbaren Frachtladesystems senden die lokalen Steuereinheiten den Zustand der Antriebsmittel, Überdeckungssensoren und Näherungsschalter über das Bussystem.

Der Vorteil der Aufteilung der Ladefläche in Sektoren liegt darin, dass eine einem Sektor zugeordnete lokale Steuereinheit, die auch Sector Control Box (SCB) genannt wird, nur über eine begrenzte Anzahl von IO-Ports verfügen muss. Soll eine große Ladefläche mit einem Frachtladesystem ausgerüstet werden, so geschieht dies durch Einsatz einer entsprechenden Anzahl SCBs. Dadurch, dass die SCBs über ein Bussystem mit der zentralen Steuereinheit (CCB: Compartment Control Box) verbunden sind, ist die Anzahl möglicher Sektoren ausschließlich dadurch begrenzt, wie viele SCBs über das Bussystem adressiert werden können.

Dadurch, dass jede SCB den Sektorzustand, also Informationen darüber, welche Antriebsmittel und Näherungsschalter im entsprechenden Sektor vorhanden sind sowie über den Zustand der Überdeckungssensoren und Näherungsschalter, über das Bussystem sendet, verfügt jede SCB über ein Abbild und den Zustand des gesamten Frachtladesystems. Zu diesem Zweck verfügen die lokalen Steuereinheiten über Mittel zur Speicherung der Zustände aller Sektoren.

In einer Ausgestaltungsform der Erfindung handelt es sich bei dem Bussystem um einen CAN-Bus (CAN: Controller Area Network), ein etabliertes und zuverlässiges Bussystem. Bevorzugt wird der Sektorzustand in einem standardisierten Status-Objekt des CAN-Busses gesendet. Der Sektorzustand ist dabei in den Nutzdaten des Status-Objektes codiert, während die Adresse der SCB aus dem Nachrichtenkopf gewonnen und damit der zugehörige Sektor identifiziert wird.

Bevorzugt sendet eine lokale Steuereinheit den Sektorzustand bei Inbetriebnahme des Frachtladesystems und/oder einer Änderung des Sektorzustandes. So wird bei Inbetriebnahme des Frachtladesystems eine Initialisierung vorgenommen, nach der jede SCB das Abbild und den Zustand des Frachtladesystems kennt. Eine Aktualisierung dieser Daten ist nur notwendig, wenn sich der Zustand der Komponenten in einem Sektor ändert.

In einer Ausgestaltung der Erfindung handelt es sich bei den Antriebsmitteln um Flurförderer, insbesondere Walzenförderer. Derartige Antriebsmittel sind als PDUs (Power Drive Unit) für Frachtladesysteme bekannt.

Um den Verschleiß der Antriebsmittel und den Energiebedarf zu senken, ist es bei Frachtladesystemen üblich, nur jene Antriebsmittel zu aktivieren, also in Betrieb zu setzen, die vom Frachtstück überdeckt werden. In einer Ausgestaltung der Erfindung wird auch ein nicht vom Frachtstück überdecktes Antriebsmittel aktiviert, wenn es in Transportrichtung blickend hinter einem vom Frachtstück überdeckten Antriebsmittel angeordnet ist. Dies bedeutet, dass ein Antriebsmittel, das als nächstes in den Transportvorgang involviert werden wird, vorausschauend aktiviert wird. Dadurch wird verhindert, dass beim Aktivieren des Antriebsmittels eine ruckartige Kraft auf das Frachtstück ausgeübt wird.

Hat ein Frachtstück seine Endposition auf der Ladefläche erreicht, so wird ein Riegel aufgestellt und das Frachtstück damit fixiert. Dabei dienen Näherungsschalter der Detektion, ob ein Riegel aufgestellt ist. In einer Ausgestaltungsform der Erfindung wird ein in den Frachtraum hineinblickend hinter einem aufgestellten Riegel liegendes Antriebsmittel nicht aktiviert. Dadurch wird verhindert, dass die unter einem fixierten Frachtstück befindlichen Antriebsmittel aktiviert werden und somit verstärkt verschleißen.

Die Erfindung soll anhand eines Ausführungsbeispiels näher erläutert werden.

### Kurze Beschreibung der Zeichnung

Dabei zeigt
- Figur 1: die physikalische Anordnung eines Frachtladesystems und
- Figur 2: den logischen Aufbau eines Frachtladesystems.

### Wege zur Ausführung der Erfindung

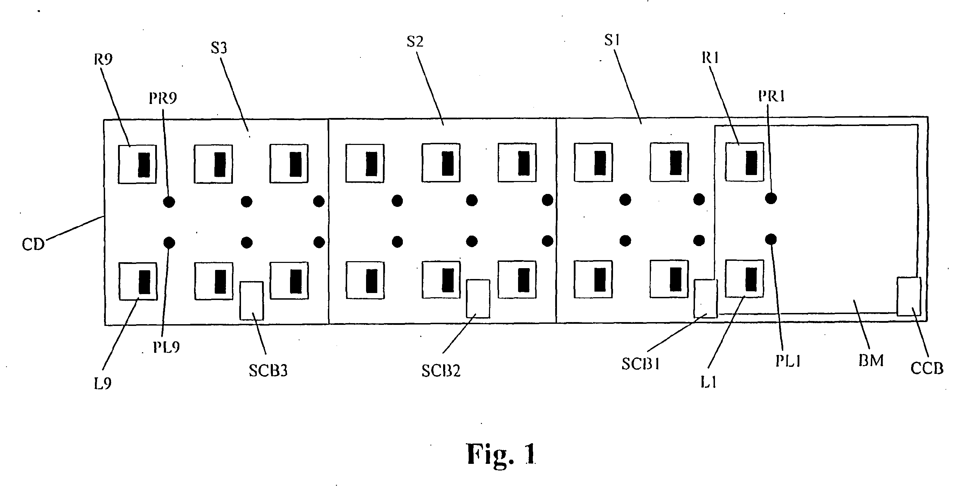

Figur 1 zeigt den Frachtraum CD eines Flugzeuges im Aufriss. Dieser besteht aus einem Kugelmattenbereich BM und einer Ladefläche, die in die drei Sektoren S1, S2 und S3 unterteilt ist. In jedem Sektor sind sechs Antriebsmittel und sechs Näherungsschalter angeordnet, wobei jeder Näherungsschalter der Überwachung des Zustandes eines in der Figur nicht dargestellten Riegels dient. Die insgesamt 18 Antriebsmittel L1 bis L9 und R1 bis R9 und 18 Näherungsschalter PL1 bis PL9 und PR1 bis PR9 sind in jeweils zwei Reihen aufgeteilt, die von der Kugelmatte BM aus in den Frachtraum CD schauend als linke und rechte Reihe bezeichnet werden. In jeder Reihe sind die Antriebsmittel, bei denen es sich im vorliegenden Beispiel um PDUs handelt, und die Näherungsschalter fortlaufend durchnummeriert. So befinden sich im Sektor S1 die PDUs L1, L2, L3, R1, R2 und R3 sowie die Näherungsschalter PL1, PL2, PL3, PR1, PR2 und PR3. Darüber hinaus ist jedem Sektor eine lokale Steuereinheit zugeordnet. Die Steuereinheit SCB1 ist Sektor S1 zugeordnet, die Steuereinheit SCB2 ist dem Sektor S2 zugeordnet und die Steuereinheit SCB3 dem Sektor S3. Das Frachtladesystem weist weiterhin in den Figuren nicht dargestellte Überdeckungssensoren auf, die detektieren, ob eine PDU vom Frachtstück überdeckt wird. Aus Gründen der Übersichtlichkeit ist in Figur 1 nicht jede PDU und nicht jeder Näherungsschalter mit einem Bezugszeichen versehen.

Das Frachtladesystem weist weiterhin eine zentrale Steuereinheit CCB auf. Diese ist mit mindestens einem nicht dargestellten Bedienpaneel verbunden, über das das Bedienpersonal Steuerinformationen in die CCB eingibt. Dies geschieht beispielsweise mittels eines nicht dargestellten Joysticks.

Wird ein Frachtstück in den Frachtraum CD hinein transportiert, also in Figur 1 von rechts nach links befördert, so befindet sich in Transportrichtung blickend Sektor S3 hinter Sektor S2 und Sektor S1 vor Sektor S2; wird hingegen das Frachtstück aus dem Frachtraum CD hinaus transportiert, so liegt Sektor S1 in Transportrichtung blickend hinter Sektor S2. Dessen ungeachtet geht die Blickrichtung in den Frachtraum CD hinein immer von einem Standpunkt im Bereich der Kugelmatte BM aus und ist daher von der Transportrichtung des Frachtstücks unabhängig.

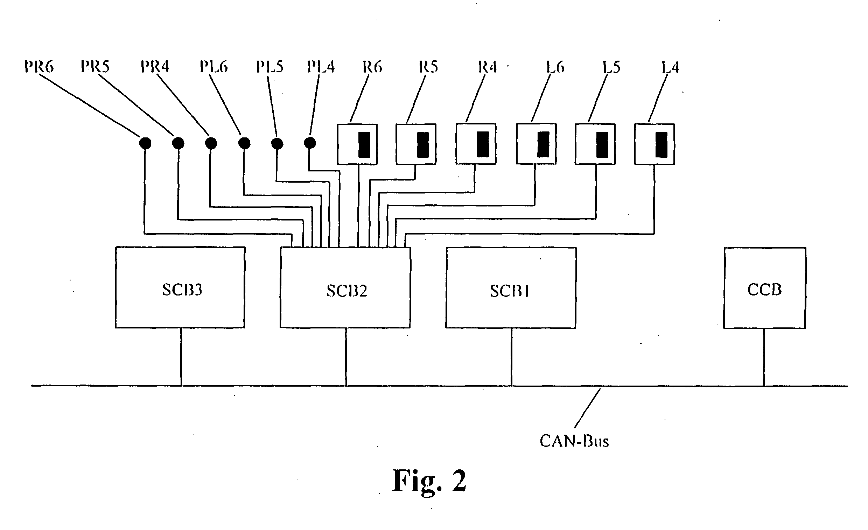

Figur 2 zeigt einen Ausschnitt aus der logischen Struktur des erfindungsgemäßen Frachtladesystems. Dabei sind die drei lokalen Steuereinheiten SCB1, SCB2 und SCB3 sowie die zentrale Steuereinheit CCB über einen CAN-Bus miteinander verbunden. Es wird weiterhin beispielhaft der Anschluss der Antriebsmittel und Näherungsschalter an die lokale Steuereinheit SCB2 des Sektors S2 gezeigt. Die PDUs L4, L5, L6, R4, R5 und R6 sowie die Näherungsschalter PL4, PL5, PL6, PR4, PR5 und PR6 sind jeweils über dedizierte Leitungen mit IO-Ports der SCB2 verbunden. Die übrigen Antriebsmittel und Näherungsschalter sind in gleicher Weise an die anderen lokalen Steuereinheiten angeschlossen.

Im vorliegenden Beispiel sind die lokalen Steuereinheiten SCB1, SCB2 und SCB3 so ausgelegt, dass sie jeweils insgesamt bis zu 16 PDUs und entsprechend 16 Überdeckunssensoren sowie bis zu 32 Näherungsschalter verwalten können.

Zunächst wird davon ausgegangen, dass noch kein Frachtstück seine Endposition im Frachtraum CD erreicht hat. Ein erstes Frachtstück befindet sich im Bereich der Kugelmatte BM und soll an seine Endposition gebracht werden. Durch den an die CCB angeschlossenen Joystick wird ein Forward-Signal gegeben, welches von der CCB umgesetzt und über den CAN-Bus ausgesendet wird. Die PDUs L1 und R1 befinden sich im Bereich der Kugelmatte BM, weshalb ein in den Frachtraum eingebrachtes Frachtstück diese beiden Antriebsmittel überdeckt. Dies wird von den zugehörigen Überdeckungssensoren erkannt und der lokalen Steuereinheit SCB 1 mitgeteilt. Die SCB 1 empfängt außerdem das Fahrsignal über den CAN-Bus und aktiviert daher die PDUs L1 und R1 derart, dass diese das Frachtstück in den Laderaum CD hinein fördern. Aus dem Forward-Fahrsignal über den CAN-Bus und die Überdeckung der PDUs L1 und R1 erkennt die SCB1, dass das Frachtstück demnächst die PDUs L2 und R2 erreichen wird. Diese werden aktiviert, obwohl sie noch nicht von dem Frachtstück überdeckt werden. Die Überdeckung der PDUs L1 und R1 wird den anderen lokalen Steuereinheiten über den CAN-Bus signalisiert. Somit kennt jede lokale Steuereinheit aus dem Signal der Überdeckungssensoren die aktuelle Position des Frachtstücks und den Gesamtzustand des Frachtladesystems. Die von einer lokalen Steuereinheit über den CAN-Bus gesendete Nachricht enthält weiterhin Informationen über die vorhandenen PDUs sowie die vorhandenen Näherungsschalter und deren Zustand.

Im weiteren Verlauf des Transports des Frachtstücks in den Frachtraum CD hinein werden die PDUs L3 und R3 aktiviert und darauf folgend vom Frachtstück überdeckt. Diese Überdeckung wird von der SCB1 über den CAN-Bus gemeldet.

Aus dem Forward-Fahrsignal der CCB, der Kenntnis, dass die PDUs L3 und R3 an der Sektorgrenze liegen, und der Überdeckung der PDUs L3 und R3 erkennt die SCB2, dass als nächstes die PDUs L4 und R4, die in den von der SCB2 gesteuerten Sektor S2 fallen, an dem Transportvorgang mitwirken. Die SCB2 aktiviert daher die PDUs L4 und R4. Der Transportvorgang des Frachtstücks in den Frachtraum CD hinein setzt sich fort, bis das Frachtstück seine endgültige Position erreicht hat.

Im vorliegenden Beispiel überdeckt das Frachtstück in seiner Endposition die PDUs L8, L9, R8 und R9. Durch Aufstellen der Riegel, die von den Näherungsschaltern PL8 und PR8 überwacht werden, wird das Frachtstück in seiner Lage gesichert. Die Näherungsschalter PL8 und PR8 melden das Aufstellen der zugehörigen Riegel an die SCB3. Die SCB3 sendet eine entsprechende Nachricht über den CAN-Bus an die anderen lokalen Steuereinheiten. Wird ein zweites Frachtstück in den Frachtraum CD eingebracht, so wird dieses innerhalb des Frachtraumes CD analog zum ersten Frachtstück transportiert. Wurde das zweite Frachtstück innerhalb des Frachtraumes CD so weit transportiert, dass es die PDUs L7 und R7 überdeckt, so würde die SCB3 die PDUs L8 und R8 aktivieren. Da die den Näherungsschaltern PL8 und PR8 zugeordneten Riegel jedoch aufgestellt sind, unterbleibt eine Aktivierung der PDUs L8 und R8, die in Transportrichtung blickend hinter den aufgestellten Riegeln angeordnet sind.

Obwohl sich die vorangegangenen Erläuterungen ausschließlich auf den Transport eines Frachtstückes in den Frachtraum CD hinein beziehen, sind sie analog auch auf die umgekehrte Transportrichtung anwendbar. Die CCB sendet in diesem Fall ein Aft-Fahrsignal über den CAN-Bus, und die lokalen Steuereinheiten bestimmen daraus sowie aus dem Abbild und Status des Frachtladesystems die zu aktivierenden PDUs. Auch in diesem Fall werden die in Transportrichtung blickend direkt hinter den vom Frachtstück überdeckten PDUs angeordneten PDUs vorausschauend aktiviert. Ebenfalls werden in den Frachtraum CD hineinblickend hinter einem aufgestellten Riegel angeordnete PDUs nicht aktiviert.

In einer Abwandlung des Ausführungsbeispiels ist das Frachtladesystem auf Frachtstücke mit zwei unterschiedlichen normierten Größen ausgelegt. Dadurch ergibt sich die Notwendigkeit, in Abhängigkeit der verschiedenen Größen Riegel zur Fixierung der Frachtstücke an mehreren Positionen anzubringen. Konkret sind vor jeder PDU zwei Riegel und somit zwei Näherungsschalter angeordnet. Somit lassen sich verschiedenste Beladungsszenarien realisieren.

In der Firmware jeder lokalen Steuereinheit sind die möglichen Positionen der PDUs und Riegel/Näherungsschalter innerhalb eines Sektors gespeichert. In der Information, welche dieser Positionen besetzt sind, ist also die vollständige Struktur des Sektors abgebildet. Über den CAN-Bus muss daher für jeden Sektor nur übertragen werden, welche PDUs vorhanden sind, welche PDUs überdeckt sind, welche Näherungsschalter vorhanden sind und welche Näherungsschalter aktiviert sind. Da es sich dabei jeweils um binäre Informationen handelt, wird der Sektorzustand vorzugsweise in einem Bitmuster codiert. Da das für den CAN-Bus standardisierte Status-Objekt acht Byte Nutzdaten bereitstellt, werden die vorhandenen PDUs, die vorhandenen Näherungsschalter, die überdeckten PDUs und die aktivierten Näherungsschalter jeweils in zwei Byte codiert. Daraus ergibt sich, dass in einem Status-Objekt der Sektorzustand für insgesamt 16 PDUs und 16 Näherungsschalter übertragen werden kann.

Bevorzugt folgen die CAN-Bus-Adressen der lokalen Steuereinheiten einem den lokalen Steuereinheiten bekannten Muster, beispielsweise durch Vergabe fortlaufender Adressen. Somit kann jede lokale Steuereinheit aus der Adresse einer anderen lokalen Steuereinheit die Position des von dieser anderen Steuereinheit gesteuerten Sektors innerhalb der Frachtraumes CD bestimmen.

In dem in Figur 1 gezeigten Ausführungsbeispiel sind in jedem Sektor drei PDUs und drei Näherungsschalter pro Reihe angeordnet. Die vier Byte, in denen die vorhandenen PDUs und Näherungsschalter codiert sind, lauten daher übereinstimmend 00000111. Aus diesem Bitmuster für die vorhandenen PDUs in jeder Reihe des Sektors S1 erkennt die SCB2 beispielsweise, dass auf die PDU L3 des Sektors S1 die PDU L4 des Sektors S2 und auf die PDU R3 des Sektors S1 die PDU R4 des Sektors S2 folgt.

Vorstehend wurde bereits beschrieben, dass in einer Abwandlung des Ausführungsbeispiels vor jeder PDU zwei Riegel und damit zwei Näherungsschalter installiert sind. Welcher der beiden Riegel zur Fixierung des Frachtstücks aufgestellt wird, ist dabei von der Größe des Frachtstücks abhängig. Es kann jedoch jeweils nur maximal einer der beiden Riegel aufgestellt werden. Daher können die Ausgangssignale der beiden Näherungsschalter vor jeder PDU in der lokalen Steuereinheit einer Oder-Verknüpfung unterzogen werden, wobei das Ergebnis dieser Verknüpfung in die Nachricht über den Sektorzustand codiert wird. Somit ist die Anzahl der im Status-Objekt verfügbaren Bits auch für die Abwandlung mit doppelter Riegelanzahl ausreichend.

In Anknüpfung an das Ausführungsbeispiel sei der Zustand betrachtet, in dem sich das erste Frachstück verriegelt in seiner Endposition befindet und das zweite Frachtstück noch nicht in den Frachtraum CD eingebracht ist. Die PDUs L8, L9, R8 und R9 sind überdeckt und die Näherungsschalter PL 8 und PR 8 signalisieren der SCB3, dass die zugehörigen Riegel aufgestellt sind. Neben dem oben bereits hergeleiteten Bitmuster 00000111 für die vier Byte der vorhandenen PDUs und Näherungsschalter ergibt sich für die beiden Bytes der überdeckten PDUs jeweils das Bildmuster 00000110 sowie für die Zustandsbytes der Näherungsschalter das Bitmuster 00000010.

Hat ein Frachtstück seine Endposition erreicht, so werden bevorzugt die von ihm überdeckten PDUs trotz Verriegelung des Frachtstücks im Hold-Modus betrieben, bis ein weiteres Frachtstück seine Endposition erreicht hat und die dortigen Näherungsschalter dessen Verriegelung anzeigen. Dadurch wird gewährleistet, dass Frachtstücke durchgehend gegen Verrutschen gesichert sind und somit die Arbeitssicherheit für das Bedienpersonal erhöht wird.

Bevorzugt wird das von der CCB über den CAN-Bus gesendete Fahrsignal zyklisch wiederholt. Dadurch wird sichergestellt, dass aktivierte PDUs abgeschaltet werden, auch wenn die zugehörige lokale Steuereinheit kein Stopp-Signal empfangen hat. Damit wird erreicht, dass beispielsweise bei einer Störung des CAN-Bus aktive PDUs augenblicklich abgeschaltet oder in den Hold-Modus versetzt werden.

Das vorangegangene Ausführungsbeispiel ist rein exemplarisch und insofern nicht beschränkend. Insbesondere kann die Größe, Anzahl und Anordnung der Sektoren variieren, wobei prinzipiell die Sektoren nicht gleich groß sein müssen und jeweils beliebig mit Antriebsmitteln und Sensoren besetzt sein können. So ist es beispielsweise möglich, Positionen für Antriebsmittel unbesetzt zu lassen, was durch Nullen im entsprechenden Bitmuster repräsentiert wird. Wäre in Anlehnung an das Frachtladesystem aus Figur 1 zum Beispiel die Möglichkeit vorgesehen, zwischen den PDUs R1 und R2 bzw. R2 und R3 jeweils noch eine PDU anzuordnen, sind diese Stellen jedoch unbesetzt so ergäbe sich das Bitmuster 00010101 für die besetzten PDU-Positionen der rechten Reihe. Auch die Anordnung der Antriebsmittel und Näherungsschalter innerhalb eines Sektors kann geändert werden, ohne den Erfindungsgedanken zu verlassen.

## Patentansprüche

1. Skalierbares Frachtladesystem, insbesondere für ein Luftfahrzeug, mit Antriebsmitteln (L1-L9, R1-R9), Überdeckungssensoren, Riegeln, Näherungsschaltern (PL1-PL9, PR1-PR9) und einer zentralen Steuereinrichtung (CCB), **dadurch gekennzeichnet, dass** die Ladefläche in Sektoren (S1, S2, S3) aufgeteilt ist, jedem Sektor eine lokale Steuereinheit (SCB1, SCB2, SCB3) zugeordnet ist, die Antriebsmittel, Überdeckungssensoren und Näherungsschalter eines Sektors an IO-Ports der lokalen Steuereinheit angeschlossen sind und die lokalen Steuereinheiten über ein Bussystem (CAN-BUS) mit der zentralen Steuereinheit verbunden sind.

2. Frachtladesystem nach Anspruch 1, **dadurch gekennzeichnet, dass** die lokalen Steuereinheiten (SCB1, SCB2, SCB3) über Mittel zur Speicherung der Zustände aller Sektoren (S1, S2, S3) verfügen.

3. Frachtladesystem nach Anspruch 1 oder 2, **dadurch gekennzeichnet, dass** es sich bei den Antriebsmitteln (L1-L9, R1-R9) um Flurförderer, insbesondere Walzenförderer handelt.

4. Frachtladesystem nach einem der Ansprüche 1 bis 3, **dadurch gekennzeichnet, dass** es sich bei dem Bussystem um einen CAN-Bus handelt.

5. Verfahren zum Betrieb eines skalierbaren Frachtladesystems nach einem der Ansprüche 1 bis 4, **dadurch gekennzeichnet, dass** die lokalen Steuereinheiten (SCB1, SCB2, SCB3) den Zustand der Antriebsmittel (L1-L9, R1-R9), Überdeckungssensoren und Näherungsschalter (PL1-PL9, PR1-PR9) über das Bussystem (CAN-Bus) senden.

6. Verfahren nach Anspruch 5, **dadurch gekennzeichnet, dass** eine lokale Steuereinheit (SCB1, SCB2, SCB3) den Sektorzustand bei Inbetriebnahme des Frachtladesystems und/oder einer Änderung des Sektorzustands sendet.

7. Verfahren nach einem der Ansprüche 5 oder 6, **dadurch gekennzeichnet, dass** der Sektorzustand in einem standardisierten Status-Objekt des CAN-Busses gesendet wird.

8. Verfahren nach einem der Ansprüche 5 bis 7, **dadurch gekennzeichnet, dass** ein nicht vom Frachtstück überdecktes Antriebsmittel (L1-L9, R1-R9) aktiviert wird, wenn es in Transportrichtung blickend hinter einem vom Frachtstück überdeckten Antriebsmittel angeordnet ist.

9. Verfahren nach einem der Ansprüche 5 bis 8, **dadurch gekennzeichnet, dass** ein in den Frachtraum hineinblickend hinter einem aufgestellten Riegel liegendes Antriebsmittel (L1-L9, R1-R9) nicht aktiviert wird.

## Claims

1. Scalable freight-loading system, in particular for an aircraft, having drive means (L1-L9, R1-R9), coverage sensors, bolts, proximity switches (PL1-PL9, PR1-PR9) and a central control device (CCB), **characterized in that** the loading surface is split into sectors (S1, S2, S3), each sector has an associated local control unit (SCB1, SCB2, SCB3), the drive means, coverage sensors and proximity switches in one sector are connected to I/O ports of the local control unit, and the local control units are connected to the central control unit via a bus system (CAN-BUS).

2. Freight-loading system according to Claim 1, **characterized in that** the local control units (SCB1, SCB2, SCB3) have means for storage of the statuses of all the sectors (S1, S2, S3).

3. Freight-loading system according to Claim 1 or 2, **characterized in that** the drive means (L1-L9, R1-R9) are floor conveyors, in particular roller conveyors.

4. Freight-loading system according to one of Claims 1 to 3, **characterized in that** the bus system is a CAN bus.

5. Method for operation of a scalable freight-loading system according to one of Claims 1 to 4, **characterized in that** the local control units (SCB1, SCB2, SCB3) transmit the status of the drive means (L1-L9, R1-R9), coverage sensors and proximity switches (PL1-PL9, PR1-PR9) via the bus system (CAN bus).

6. Method according to Claim 5, **characterized in that** a local control unit (SCB1, SCB2, SCB3) sends the sector status on starting up the freight-loading system and/or in the event of a change in the sector status.

7. Method according to one of Claims 5 or 6, **characterized in that** the sector status is sent using a standardized status object of the CAN bus.

8. Method according to one of Claims 5 to 7, **characterized in that** a drive means (L1-L9, R1-R9) which is not covered by a piece of freight is activated when it is arranged behind a drive means that is covered by a piece of freight, looking in the transport direction.

9. Method according to one of Claims 5 to 8, **characterized in that** a drive means (L1-L9, R1-R9) which is located behind an erected bolt looking into the cargo bay is not activated.

## Revendications

1. Système de chargement de fret modulable, notamment pour un aéronef, avec des moyens de propulsion (L1-L9, R1-R9), des capteurs de couverture, des verrous, des commutateurs de proximité (PL1-PL9, PR1-PR9) et un dispositif de commande central (CCB), **caractérisé en ce que** la surface de chargement est découpée en secteurs (S1, S2, S3), qu'une unité de commande locale (SCB1, SCB2, SCB3) est affectée à chaque secteur, que les moyens de propulsion, les capteurs de couverture et les commutateurs de proximité d'un secteur sont raccordés aux ports d'entrée/sortie de l'unité de commande locale et les unités de commande locales sont reliées à l'unité de commande centrale par l'intermédiaire d'un système de bus (CAN-BUS).

2. Système de chargement de fret selon la revendication 1, **caractérisé en ce que** les unités de commande locales (SCB1, SCB2, SCB3) disposent de moyens pour la mémorisation des états de tous les secteurs (S1, S2, S3).

3. Système de chargement de fret selon la revendication 1 ou 2, **caractérisé en ce que** les moyens de propulsion (L1-L9, R1-R9) sont des convoyeurs au sol, notamment des convoyeurs à rouleaux.

4. Système de chargement de fret selon une des revendications 1 à 3, **caractérisé en ce que** le système de bus est un CAN-Bus.

5. Procédé d'exploitation d'un système de chargement de fret modulable selon une des revendications 1 à 4, **caractérisé en ce que** les unités de commande locales (SCB1, SCB2, SCB3) transmettent l'état des moyens de propulsion (L1-L9, R1-R9), des capteurs de couverture et des commutateurs de proximité (PL1-PL9, PR1-PR9) par l'intermédiaire du système de bus (CAN-BUS).

6. Procédé selon la revendication 5, **caractérisé en ce qu'**une unité de commande locale (SCB1, SCB2, SCB3) transmet l'état du secteur à la mise en route du système de chargement de fret et/ou lors d'une modification de l'état du secteur.

7. Procédé selon une des revendications 5 ou 6, **caractérisé en ce que** l'état du secteur est transmis dans un objet-status standardisé du CAN-Bus.

8. Procédé selon une des revendications 5 à 7, **caractérisé en ce qu'**on active un moyen de propulsion (L1-L9, R1-R9) non couvert par le colis, lorsqu'en regardant dans la direction du transport, il est disposé derrière un moyen de propulsion couvert par le colis.

9. Procédé selon une des revendications 5 à 8, **caractérisé en ce qu'**on n'active pas un moyen de propulsion (L1-L9, R1-R9) se trouvant derrière une barrière dressée lorsqu'on regarde vers l'intérieur de l'espace de fret.
